# EUROPÄISCHE PATENTSCHRIFT

(11) **EP 1 468 818 B1**
(45) Veröffentlichungstag und Bekanntmachung des Hinweises auf die Patenterteilung: **23.05.2007**
(21) Anmeldenummer: 04008849.4
(22) Anmeldetag: 14.04.2004
(51) Int. Cl.: B32B 15/12, B32B 15/14, B32B 3/24, B32B 5/28

(54) **Schichtplatte**
Laminated plate
Panneau laminé

(30) Priorität: 14.04.2003 DE 10317271
(43) Veröffentlichungstag der Anmeldung: 20.10.2004
(73) Patentinhaber: Thermopal GmbH, 88299 Leutkirch im Allgäu (DE)
(72) Erfinder: Wehr, Torsten, 87787 Wolfertschwenden (DE)
(74) Vertreter: Dobler, Markus

(56) Entgegenhaltungen:
- GB-A- 1 183 031
- GB-A- 2 343 653
- US-A- 5 075 166

## Beschreibung

Die Erfindung betrifft eine Schichtplatte nach dem Oberbegriff des Anspruchs 1.

### Stand der Technik:

Schichtplatten der einleitend bezeichneten Art sind bereits in vielfältigen Ausführungsformen bekannt geworden. Bei einer Ausführungsform werden kunstharzimprägnierte Papierbahnen mit einer Dekorschicht unter Druck und Hitze zu einem sogenannten HPL (High Pressure Laminate) verpresst.

Bei einer anderen Ausführungsform besteht die Deckschicht aus einem dünnen gelochten Aluminiumblech, um hierdurch nicht nur eine metalloptische Anmutung, sondern auch eine Schichtplatte mit einer vergleichsweise hoch beanspruchbaren Oberfläche zu erzeugen.

### Aufgabe und Vorteile der Erfindung:

Der Erfindung liegt die Aufgabe zugrunde, den Einsatzbereich von Schichtplatten mit einer oder mehreren kunstharzgetränkten Faserstoffbahnen, die unter Hitze und Druck verpresst werden, zu erweitern.

Diese Aufgabe wird durch die Merkmale des Anspruchs 1 gelöst.

In den Unteransprüchen sind vorteilhafte und zweckmäßige Ausgestaltungen der Erfindung angegeben.

Die Erfindung geht von einer Schichtplatte aus, die aus einer oder mehreren Schichten aus einer kunstharzgetränkten Faserstoffbahn, insbesondere einer mit einem härtbaren Harz imprägnierten Papierbahn besteht, die unter Druck und Hitze verbunden sind. Der Kern der Erfindung liegt nun darin, dass im Schichtaufbau eine ferromagnetische, mit Öffnungen versehene, insbesondere zusammenhängende Metalllage vorgesehen ist. Durch diese Vorgehensweise wird eine Schichtplatte, z.B. ein HPL bereitgestellt, die als Magnethaftplatte verwendet werden kann. Denn durch die ferromagnetische Metalllage bleiben magnetische Elemente daran haften. Durch die Öffnungen in der Metalllage ist eine Haftung der angrenzenden Schichten im Schichtaufbau an der Metalllage unproblematisch, da diese Schichten durch die Öffnungen der Metalllage hindurch miteinander verbunden sind.

Aus dem Stand der Technik ist eine Schichtplatte bekannt, bei welcher zwischen Papieren und/oder anderen Trägerstoffen ein ferromagnetisches Blech angeordnet ist. Ein solcher Schichtaufbau hat jedoch den Nachteil, dass die Schichten am Blech ohne eine entsprechende Vorbehandlung, z.B. durch eine Primer-Beschichtung schlecht haften. Durch das ganzflächige Blech ist die Verarbeitung, z.B. durch Sägen zudem nur mit speziellen Werkzeugen möglich. Eine mit Öffnungen versehene Metalllage hingegen lässt sich deutlich leichter, z.B. auch mit herkömmlichen Werkzeugen der Holzverarbeitung bearbeiten.

Eine vergleichsweise einfache Bearbeitung ist für eine bekannte Magnetfeldhaftplatte in Form eines "Ferrokartons" gegeben. Zur Herstellung eines Ferrokartons werden der Papiermaische Eisenspäne beigeben. Aus der Maische wird dann dickeres Papier bzw. Karton in herkömmlicher weise erzeugt. Ein derartiger Ferrokarton hat jedoch den Nachteil, einer schwachen magnetischen Haftung.

In einer besonders bevorzugten Ausgestaltung der Erfindung umfasst die Metalllage ein Metallgewebe, z.B. ein Drahtgewebe mit einer Drahtstärke von beispielsweise 0,3 mm. Ein solches Drahtgewebe stellt eine ausreichende magnetische Haftung zur Verfügung und lässt sich zudem problemlos, z.B. auch mit Werkzeugen der Holzverarbeitung im Aufbau einer Schichtplatte, z.B. auf eine Holzträgerplatte aufgebracht, bearbeiten.

Die mit Öffnungen versehene Metalllage kann in Form eines sehr dünnen ferromagnetischen Metallblechs vorliegen, das mit einer Vielzahl von Öffnungen versehen ist, so dass sich eine netzartige Struktur ausbildet, bei welcher die vorhandenen Metallstege im Vergleich zur Fläche der Öffnungen nicht soweit reduziert sind, dass eine unerwünscht kleine magnetische Haftung die Folge ist. Über das Verhältnis von Öffnungsfläche zur Metallfläche bzw. die Größe der Öffnungen im Vergleich zur Größe der Metallstrukturen der Metalllage kann die Haftfähigkeit einer entsprechenden Schichtplatte für Magnete auf gewünschte Werte vergleichsweise einfach eingestellt werden. Bei einem Metallgewebe lässt sich dies über die Drahtdicke und die Maschenweite erzielen.

Denkbar ist auch eine Metalllage in Form von auf Abstand angeordneten Metallstreifen bzw. im Gitter angeordnete Metallstreifen, wobei entsprechende Dimensionierungsüberlagerungen gelten.

Um in der Gestaltung der Oberfläche der Schichtplatte möglichst frei zu sein, wird im Weiteren vorgeschlagen, dass die Metalllage zwischen den Faserstoffbahnen liegt.

Vorzugsweise ist die Metalllage derart eingebettet, dass sie von außen nicht wahrgenommen werden kann.

Bei einem weiteren Aufbau kann eine Trägerplatte und Faserstoffbahnen, z.B. Papierbahnen verwendet werden, wobei die Metalllage zwischen der Trägerplatte und den Faserbahnen eingebettet ist.

Vorzugsweise werden die soeben beschriebenen Ausführungsformen von Schichtplatten mit Metalllage in einem Verpressschritt erzeugt, bei welcher die Metalllage mit eingepresst wird.

### Zeichnungen:

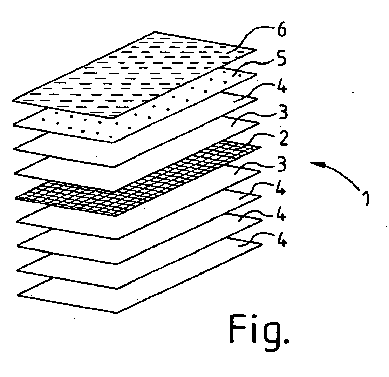

Ein Ausführungsbeispiel der Erfindung ist in der einzigen Figur in einer perspektivischen Explosionsdarstellung abgebildet.

### Beschreibung des Ausführungsbeispiels:

In der Figur ist in der Explosionsdarstellung ein magnethaftendes HPL 1 dargestellt. Das HPL 1 umfasst im mittleren Bereich ein Metallgewebe 2, auf welches beidseitig ein Overlay 3 folgt. Ein Overlay ist eine Bahn, z.B. eine Zellulosebahn, mit welcher zusätzlich Harz in den Schichtaufbau gebracht wird. Ein Overlay aus einer Zellulosebahn ist regelmäßig mit ungefähr doppelt so viel Harz getränkt wie ein übliches kunstharzgetränktes Papier, z.B. ein Natronkraftpapier.

In der Figur folgen auf die Overlays 3 Natronkraftpapiere 4. In Richtung Sichtfläche ist auf dem Overlay ein Natronkraftpapier 4, auf der der Sichtfläche gegenüberliegenden Seite sind hier beispielhaft drei weitere Natronkraftpapiere 4 angeordnet.

Auf das sichtseitige Natronkraftpapier 4 ist ein Underlay 5 aufgebracht. Ein Underlay stellt eine optische Trennschicht dar, um Farbsprünge zu einer Dekorschicht abzumildern. Im Ausführungsbeispiel folgt auf das Underlay 5 eine Dekorschicht 6.

Zur Herstellung des HPLs 1 werden diese Schichten z.B. in einem Schritt unter Druck und Hitze verpresst, beispielsweise mit einer Rückkühlpresse.

Ein Aufbau mit Faserstoffbahnen, die mit härtbaren Harzen getränkt sind und in welche eine ferromagnetische mit Öffnungen versehene Metalllage eingebettet ist, kann auf vielfältige weitere Arten realisiert werden.

Denkbar ist beispielsweise auch ein Einbau einer erfindungsgemäßen ferromagnetischen Metalllage in eine direkt beschichtete Verbundplatte. Das heißt, auf eine Trägerplatte, z.B. eine Spanplatte wird in einem Verpressschritt ein Metallgewebe, und wenigstens ein kunstharzgetränktes Papier, gegebenenfalls in Form einer Dekorschicht, aufgebracht.

### Bezugszeichenliste:

- 1: HPL
- 2: Metallgewebe
- 3: Natronkraftpapier
- 4: Underlay
- 5: Dekorschicht

## Patentansprüche

1. Schichtplatte (1) bestehend aus einer oder mehreren Schichten (3, 4, 5, 6) aus einer kunstharzgetränkten Faserstoffbahn, insbesondere einer mit einem härtbaren Harz imprägnierten Papierbahn (3, 4, 5, 6), die unter Druck und Hitze verbunden sind, **dadurch gekennzeichnet, dass** im Schichtaufbau eine ferromagnetische, mit Öffnungen versehene Metalllage (2) vorgesehen ist.

2. Schichtplatte nach Anspruch 1, **dadurch gekennzeichnet, dass** die Metalllage ein Metallgewebe (2) umfasst.

3. Schichtplatte nach einem der vorhergehenden Ansprüche, **dadurch gekennzeichnet, dass** die Metalllage (2) zwischen den Faserstoffbahnen (3, 4, 5, 6) liegt.

4. Schichtplatte nach einem der vorhergehenden Ansprüche, **dadurch gekennzeichnet, dass** der Schichtaufbau eine Trägerplatte umfasst und dass die Metalllage zwischen Trägerplatte und Faserstoffbahnen eingebunden ist.

5. Schichtplatte nach einem der vorhergehenden Ansprüche, **dadurch gekennzeichnet, dass** die Metalllage (2) in einem Verpressschritt mit eingepresst ist.

## Claims

1. Laminated plate (1) consisting of one or more layers (3, 4, 5, 6) made from a synthetic-resin-impregnated fibre strip, in particular a paper strip (3, 4, 5, 6) impregnated with a curable resin, which are bonded together under pressure and heat, **characterised in that** in the structure of layers there is a ferromagnetic metal sheet (2) provided with openings.

2. Laminated plate according to claim 1, **characterised in that** the metal sheet comprises a metal weave (2).

3. Laminated plate according to one of the preceding claims, **characterised in that** the metal sheet (2) lies between the fibre strips (3, 4, 5, 6).

4. Laminated plate according to one of the preceding claims, **characterised in that** the structure of layers comprises a support plate, and **in that** the metal sheet is bonded between the support plate and the fibre strips.

5. Laminated plate according to one of the preceding claims, **characterised in that** the metal sheet (2) is also pressed in a pressing stage.

## Revendications

1. Panneau laminé (1) composé d'une ou plusieurs couches (3,4,5,6) en bande de matière fibreuse imprégnée de résine synthétique, en particulier en bande de papier (3, 4, 5, 6) imprégnée d'une résine durcissable, lesquelles sont reliées par pression et chaleur,
**caractérisé en ce qu'**il est prévu dans la construction laminée une couche métallique (2) ferromagnétique pourvue d'ouvertures.

2. Panneau laminé selon la revendication 1,
**caractérisé en ce que** la couche métallique comprend une toile métallique (2).

3. Panneau laminé selon l'une des revendications précédentes,
**caractérisé en ce que** la couche métallique (2) est située entre les bandes de matière fibreuse (3,4,5,6).

4. Panneau laminé selon l'une des revendications précédentes,
**caractérisé en ce que** la construction laminée comprend un panneau de support et **en ce que** la couche métallique est intégrée entre le panneau de support et les bandes de matière fibreuse.

5. Panneau laminé selon l'une des revendications précédentes,
**caractérisé en ce que** la couche métallique (2) est liée par compression dans une phase de compression.
